# EUROPEAN PATENT SPECIFICATION

(11) **EP 1 925 839 B1**
(45) Date of publication and mention of the grant of the patent: **12.10.2011**
(21) Application number: 07022298.9
(22) Date of filing: 16.11.2007
(51) Int. Cl.: F16D 13/64, F16D 13/68

(54) **Clutch driven plate**
Kupplungscheibe
Disque d'embrayage

(30) Priority: 23.11.2006 GB 0623458
(43) Date of publication of application: 28.05.2008
(73) Proprietor: Automotive Products S.p.A., Spontini, Ancona (IT)
(72) Inventor: Gallagher, Paul Andrew, 60030 Monsano Ancona (IT); Paciotti, Gianni, 60035 Jesi Ancona (IT)
(74) Representative: Morrall, Roger

(56) References cited:
- WO-A-2008/043452
- DE-B- 1 575 746
- FR-A- 2 412 003
- US-A- 4 545 468

## Description

This invention relates to clutch driven plates and in particular to clutch driven plates, hereinafter referred to as being "of the type described" having an outer annular friction member rotatable relative to a hub to damp torsional vibrations in the driven plate, the hub comprising a pair of axially spaced side plates which support the friction member and an inner flange connected with a central drive sleeve, circumferentially extending spring means acting between the side plates and the inner flange to damp rotation between the friction member supported from the side plates and the drive sleeve, the outer periphery of the inner flange having circumferentially spaced cut outs which receive stop members extending between the side plates, the stop members limiting the relative rotation between the side plates and the flange by contact with the ends of the circumferentially spaced cut outs.

A prior art clutch driver plate is known from US-A-4 545 468.

Clutch driven plates of the type described are well known and it is also well known to form the stop members of such driven plates as axially extending sheet metal members in order to reduce the radial extent of the stop members thus allowing larger circumferentially extending springs to be used which are located at a larger radius from the centre of the drive sleeve thus generating a greater damping effect.

The problem with such known forms of clutch driven plate of the type described is that the formation of the stop members and the subsequent assembly of the drive plate is relatively complex.

It is an object of the present invention to provide a clutch driven plate of the type described which is cheaper and easier to manufacture.

Thus according to the present invention there is provided a clutch driven plate having an outer annular friction member rotatable relative to a hub to damp torsional vibrations in the driven plate, the hub comprising a pair of axially spaced side plates which support the friction member and an inner flange connected with a central drive sleeve, circumferentially extending spring means acting between the side plates and the inner flange to damp rotation between the friction member supported from the side plates and the drive sleeve, the outer periphery of the inner flange having circumferentially spaced cut outs which receive stop members extending between the side plates, the stop members being of inverted U-shaped form and limiting the relative rotation between the side plates and the flange by contact between the bases of the U-shaped members and the ends of the circumferentially spaced cut outs, the driven plate being characterised in that a first side of each inverted U-shaped stop member comprises two circumferentially spaced attachment ears through each of which a first rivet attaches the ear to a first side plate, in that the other side of each stop member has a single larger diameter rivet attaching said other side to the other side plate, said larger diameter single rivet being located circumferentially between said two circumferentially attachment ears, and in that said first side plate has a first series of openings for alignment with a respective larger diameter rivet and for location between the attachment ears of each respective stop member, and in that said inner flange also has a second series of openings for alignment with a respective larger diameter rivet so that said larger diameter rivets can be set by punches which extend between the attachment ears of each respective stop member and through the aligned first and second series of openings to engage each respective larger diameter rivet.

This enables a cheap side plate structure to be used since the outer periphery of one or both of the side plates does not need to have the stop members integrally formed therewith, and the inverted U-shaped stop members are simply secured to the side plates so that bases of the U-shaped members extend through shallow cut outs in the inner flange.

The invention also provides a method of assembling a clutch driven plate of the above form comprising the steps of:-
- riveting the first side of each stop member to the first side plate using the first rivets to form a sub-assembly,
- assembling the remainder of the driven plate on top of the other side plate,
- placing the sub-assembly on the assembled remainder of the driven plate,
- and riveting the other side of each stop member to the other side plate to hold the driven plate together using the larger diameter rivets with punches which pass between the attachment ears of each respective stop member and through the aligned first and second series of openings to engage each respective larger diameter rivet.

One embodiment of the present invention will now be described, by way of example only, with reference to the accompanying drawings in which:-
Figure 1 shows a side view of part of a clutch driven plate in accordance with the present invention;
Figure 2 shows a section on the line X-X of figure 1;
Figure 3 shows details of a side plate and U-shaped stop member used in the driven plate of figures 1 and 2;
Figure 4 shows a section on the line Y-Y of figure 3;
Figure 5 shows a view of an inverted U-shaped stop member used in the hub of the driven plate of figures 1 to 4;
Figure 6 shows a section of the stop member of figure 5 on the line Z-Z of figure 5;
Figure 7 shows the first stage in the assembly of the clutch driven plate of the present invention, and
Figure 8 shows the completion of the assembly of the clutch driven plate.

Referring to the drawings, the clutch driven plate 10 has an outer annular friction member 11 which comprises a pair of annular friction surfaces 12 supported on a metal backing plate 13 which is carried on a hub 14 of the driven plate. The hub has two outer side plates 15a and 15b located on either side of a central flange 16 which is connected via teeth 17 on its inner periphery with corresponding teeth 18 on a central drive sleeve 19 which is splined at 20 for driving engagement with a clutch input shaft (not shown).

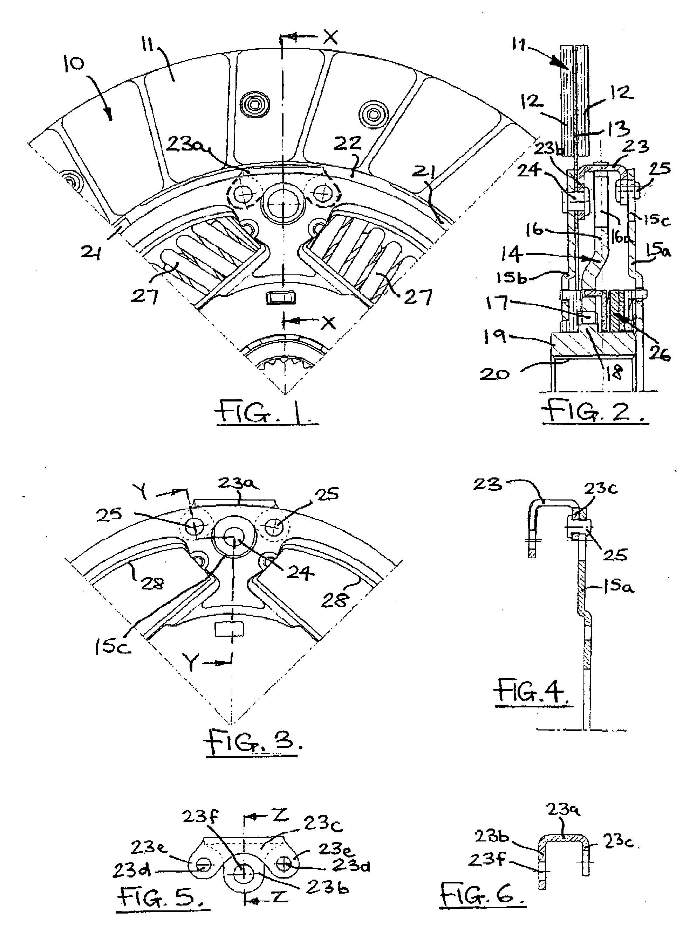

The outer periphery of flange 16 is provided with circumferentially extending projections 21 between which circumferentially extending slots 22 are defined. The two side plates 15 are joined by four circumferentially spaced and inverted U-shaped sheet metal stop members 23 which have a base portion 23a and two side portions 23b and 23c respectively. The side portion 23b is riveted to the left hand side plate 15b, as shown in figure 2, by a single larger diameter rivet 24 which is also used to secure the annular friction member 11 to the hub 14. The other side 23c of each stop member 23 is riveted by a pair of circumferentially spaced smaller diameter rivets 25 to the right hand side plate 15a. As is clear from figures 1 and 2, the base portion 23a of each stop member 23 extends through a respective slot 22 formed in the outer periphery of the flange 16. As will be appreciated these slots 22 are shallow being only required to allow the passage therethrough of the base portions 23a of the stop members 23. This means that there is a considerable proportion of the metal of the flange 16 remaining radially inward of the slots 22 which provides a high level of flexibility in the size and positioning of idle rattle damper 26 and damping springs 27 referred to below.

The side plates 15a and 15b are supported for rotation relative to the central drive sleeve 19 on the so-called idle rattle damper 26 which does not form part of the present invention and will not therefore be described in detail. This idle rattle damper includes friction members and circumferentially extending springs (not shown) which control the relative circumferential movements of the flange 16 relative to the drive sleeve 19 (due to circumferential movement between the coupling teeth 17 and 18) and thus damp small amplitude torsional vibrations which occur in the driven plate particularly when the associated vehicle engine which drives the input shaft is in its idle mode and the gearbox is in its neutral position.

As will be appreciated, the side plates 15a and 15b (and thus the annular friction member 11) can move circumferentially relative to the flange 16 (and thus the associated drive sleeve 19) by movement of the stop members 23 in the cut-outs 22. This circumferential rotation is limited by abutment of the stop members 23 with the radial projections 21 formed on the outer periphery of the flange 16. As is conventional, the rotation of friction member 11 relative to side plates 15a and 15b is controlled by circumferentially extending damping springs 27 which are received in cut-outs formed in the flange 16 (not visible in the drawings) and windows 28 formed in the side plates 15a and 15b. These springs 27, which may also be assisted by a friction damper, provide the main damping of torsional vibrations in the driven plate. As indicated above, due to the shallow nature of the slots 22 there is more metal left in flange 16 to allow the use of larger springs 27 and to allow the orientation of these springs to be better tuned for improved damping performance.

The actual shape of the stop members 23 and the positioning of the rivets 24 and 25 is an important feature of the present invention which greatly facilitates the assembly of the driven plate.

Rivets 25 extend through holes 23d in circumferentially spaced ears 23e in the side 23c of each stop member and the larger rivet 24 extends through a hole 23f in side 23b. Rivet 24 is located circumferentially between the two smaller rivets 25.

Side plate 15a is provided with openings 15c which each line up with a respective larger rivet 24 and hub flange 16 is similarly provided with openings 16a which again each line up with a respective larger rivet 24 and a respective opening 15c in side plate 15a. These openings 15c and 16a are used in the assembly of the driven plate as will now be described.

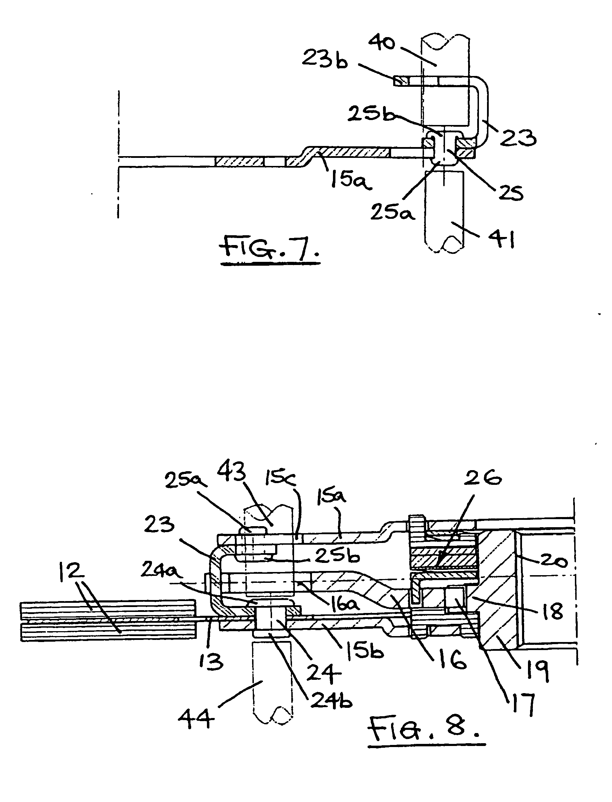

Initially the stop members 23 are riveted to side plate 15a by the rivets 25 as shown in figure 7. In this riveting operation a series of uppers punches 40 which form part of an upper portion of an assembly tool (not shown) pass either side of the side 23b of each stop member and co-operate with a second series of punches 41 which form part of a lower portion of the assembly tool located below the side plate 15a when the assembly tool is closed. Punches 41 form heads 25a on rivets 25 which already have larger heads 25b. If desired punches 40 may form heads 25b and heads 25a may already be formed on rivets 25.

The driven plate is then assembled, as shown in figure 8, by placing side plate 15b on a second assembly tool (not shown), adding backing plate 13 with its friction surfaces 12 and then building up the hub 19, flange16 with its springs 27, idle rattle damper 26 and finally adding side plate 15a to which the stop members 23 have already been riveted.

The assembly of the driven plate is completed by adding rivets 24 and riveting these rivets in position using a series of upper punches 43 which form part of an upper portion of the assembly tool. These punches 43 extend through openings 15c, between the ears 23e, and through openings 16a to contact the heads 24a already present on rivets 24. When the tool is closed the punches 43 co-operated on second series of punches 44 which form part of a lower portion of the assembly tool and which form heads 24b on rivets 24 to hold the driven plate together. If desired punches 43 can be arranged to form heads 24a and heads 24b may already be formed on the rivets 24.

Thus the shape of stop members 23 with their circumferentially spaced rivets 24 and 25 and the provision of openings 15c in side plate 15a and openings 16a in flange 16 allow the above simple assembly procedure.

The present invention thus provides a simple driven plate hub construction in which the stop members 23 are formed from sheet metal and are simply riveted to the associated side plates 15a and 15b which can therefore be of a simple pressed construction. The hub construction is therefore simple to manufacture and assemble since it does not require any complicated tools to form the stop members integral with either of the side plates. Also, the use of the radially slim stop members 23 means that the slots 22 in the radially outer periphery of the flange 16 only need to be radially shallow (substantially the same depth as the radial depth of the bases 23a of each stop member). This means that there is a considerably larger area of metal available in the flange 16 radially inboard of the slots 22 in which the springs 27 etc can be housed, thus providing a high level of flexibility in the design and positioning of the damper 26 and springs 27.

In an alternative arrangement, the U-shaped stop members 23 can be assembled with the side portions 23b and 23c fitted axially outside of one or both of the side plates 15a and 15b. In this arrangement the side plates have cut outs in their outer periphery to allow the passage of the stop members 23 and to provide a supplementary torque-bearing area between the stop members and the side plates 15a and 15b, increasing the torque capacity.

A further advantage of the present invention is that the U-shaped stop members 23 (in the case of particularly high extra torque applications) can be constructed of a larger thickness than the side plates 15a and 15b, increasing the torque capacity.

## Claims

1. A clutch driven plate having an outer annular friction member (11) rotatable relative to a hub (14) to damp torsional vibrations in the driven plate, the hub comprising a pair of axially spaced side plates (15a,15b) which support the friction member and an inner flange (16) connected with a central drive sleeve (19), circumferentially extending spring means (27) acting between the side plates and the inner flange to damp rotation between the friction member supported from the side plates and the drive sleeve, the outer periphery of the inner flange having circumferentially spaced cut outs (22) which receive stop members (23) extending between the side plates, the stop members being of inverted U-shaped form and limiting the relative rotation between the side plates and the flange by contact between the bases (23a) of the U-shaped members and the ends of the circumferentially spaced cut outs (22), the driven plate being **characterised in that** a first side (23c) of each inverted U-shaped stop member (23) comprises two circumferentially spaced attachment ears (23e) through each of which a first rivet (25) attaches the ear to a first side plate (15a), **in that** the other side (23b) of each stop member has a single larger diameter rivet (24) attaching said other side to the other side plate (15b), said larger diameter single rivet (24) being located circumferentially between said two circumferentially spaced attachment ears (23e), and **in that** said first side plate (15a) has a first series of openings (15c) for alignment with a respective larger diameter rivet (24) and for location between the attachment ears (23e) of each respective stop member, and **in that** said inner flange (16) also has a second series of openings (16a) for alignment with a respective larger diameter rivet (24) so that said larger diameter rivets can be set by punches (43) which pass between the attachment ears (23e) of each respective stop member and through the aligned first and second series of openings (15c,16a) to engage each respective larger diameter rivet (24).

2. A driven plate according to claim 1 in which the U-shaped stop members (23) are secured to the outside of one or both of the side plates (15a,15b) and the outer periphery of one or both of the side plates is provided with cut outs to allow the passage of the stop members.

3. A driven plate according to claim 1 or 2 in which the hub (14) also includes a friction damping means to damp the rotation of the side plates (15a,15b) relative to the flange (16).

4. A driven plate according to any one of claims 1 to 3 in which the hub (14) also includes additional idle rattle damper (26) to damp small amplitude torsional vibrations within the hub.

5. A method of assembling a clutch driven plate (10) according to claim 1 comprising the steps of:-
- riveting the first side (23c) of each stop member to the first side plate (15a) using the first rivets (25) to form a sub-assembly,
- assembling the remainder of the driven plate on top of the other side plate (15b),
- placing the sub-assembly on the assembled remainder of the driven plate,
- and riveting the other side (23b) of each stop member to the other side plate (15b) to hold the driven plate together using the larger diameter rivets (24) with punches (43) which pass between the attachment ears (23e) of each respective stop member and through the aligned first and second series of openings (15c,16a) to engage each respective larger diameter rivet (24).

## Patentansprüche

1. Kupplungsabtriebsscheibe mit einem äußeren ringförmigen Reibungsteil (11), das relativ zu einer Nabe (14) drehbar ist, um Drehschwingungen in der Abtriebsscheibe zu dämpfen, wobei die Nabe ein Paar axial beabstandeter Seitenscheiben (15a, 15b), die das Reibungsteil tragen, und einen inneren Flansch (16) aufweist, der mit einer zentralen Antriebsmuffe (19) verbunden ist, in Umfangsrichtung sich erstreckenden Federmitteln (27), die zwischen den Seitenscheiben und dem inneren Flansch wirksam sind, um Drehungen zwischen dem von den Seitenscheiben getragenen Reibungsteil und der Antriebsmuffe zu dämpfen, wobei der äußere Rand des inneren Flansches in Umfangsrichtung beabstandete Ausschnitte (22) hat, die Anlauf teile (23) aufnehmen, die sich zwischen den Seitenscheiben erstrecken, wobei die Anlaufteile eine umgekehrte U-Form haben und die Relativdrehung zwischen den Seitenscheiben und dem Flansch durch Kontakt zwischen den Basen (23a) der U-förmigen Teile und den Enden der in Umfangsrichtung beabstandeten Ausschnitte (22) begrenzen, wobei die Abtriebsscheibe **dadurch gekennzeichnet ist, dass** eine erste Seite (23c) eines jeden umgekehrten U-förmigen Anlaufteils (23) zwei in Umfangsrichtung beabstandete Befestigungsösen (23e) aufweist, wobei durch jede von ihnen ein erster Niet (25) die Öse an einer ersten Seitenscheibe (15a) befestigt, dass die andere Seite (23b) eines jeden Anlaufteiles einen einzelnen, im Durchmesser größeren Niet (24) hat, der die andere Seite an der anderen Seitenscheibe (15b) befestigt, wobei der im Durchmesser größere einzelne Niet (24) in Umfangsrichtung zwischen den beiden in Umfangsrichtung beabstandeten Befestigungsösen (23e) angeordnet ist, und dass die erste Seitenscheibe (15a) eine erste Reihe von Öffnungen (15c) zur Anordnung in gerader Linie mit einem jeweiligen im Durchmesser größeren Niet (24) und zur Positionierung zwischen den Befestigungsösen (23e) des jeweiligen Anlaufteiles, und dass der innere Flansch (16) auch eine zweite Reihe von Öffnungen (16a) zur Anordnung in gerader Linie mit einem jeweiligen im Durchmesser größeren Niet (24) hat, so dass die im Durchmesser größeren Niete durch Stempel (43) gesetzt werden können, die zwischen den Befestigungsösen (23e) des jeweiligen Anlaufteils und durch die fluchtend zueinander ausgerichteten erste und zweite Reihe von Öffnungen (15c, 16a) hindurchgehen, um an dem jeweiligen im Durchmesser größeren Niet (24) anzugreifen.

2. Abtriebsscheibe nach Anspruch 1, bei der die U-förmige Anlaufteile (23) an der Außenseite von einer der oder beiden Seitenscheiben (15a, 15b) fest angebracht sind und der äußere Rand von einer der oder beiden Seitenscheiben mit Ausschnitten versehen ist, um den Durchgang der Anlauf teile zu gestatten.

3. Abtriebsscheibe nach Anspruch 1 oder 2, bei der die Nabe (14) auch ein Reibungsdämpfungsmittel beinhaltet, um die Drehung der Seitenscheibe (15a, 15b) relativ zu dem Flansch (16) zu dämpfen.

4. Abtriebsscheibe nach irgend einem der Ansprüche 1 bis 3, bei der die Nabe (14) auch einen zusätzlichen Leerlaufrasseldämpfer (26) beinhaltet, um innerhalb der Nabe auftretende Drehschwingungen kleiner Amplitude zu dämpfen.

5. Verfahren zum Zusammenbauen einer Kupplungsabtriebsscheibe (10) gemäß Anspruch 1, mit den Schritten;
- Nieten der ersten Seite (23c) eines jeden Anlaufteils an die erste Seitenscheibe (15a) unter Verwendung der ersten Niete (25), um eine Unterbaugruppe zu bilden,
- Zusammenbauen des Restes der Abtriebsscheibe auf der anderen Seitenscheibe (15b),
- Anordnen der Unterbaugruppe auf dem zusammengebauten Rest der Abtriebsscheibe,
- und Nieten der anderen Seite (23b) eines jeden Anlaufteiles an die andere Seitenscheibe (15b), um die Abtriebsscheibe zusammenzuhalten, wobei die im Durchmesser größeren Niete (24) mit Stempeln (43) verwendet werden, die zwischen den Befestigungsösen (23e) des jeweiligen Anlaufteils und durch die zueinander fluchtend ausgerichteten erste und zweite Reihe von Öffnungen (155c, 16a) hindurchgehen, um an dem jeweiligen im Durchmesser größeren Niet (24) anzugreifen.

## Revendications

1. Disque d'embrayage possédant un élément de friction annulaire externe (11) tournant autour d'un moyeu (14) et destiné à amortir les vibrations de torsion du disque d'embrayage, le moyeu comprenant deux plateaux latéraux axialement espacés (15a, 15b) qui supportent l'élément de friction, et un flasque interne (16) relié à un manchon d'entraînement central (19), des moyens élastiques (27) s'étirant sur la circonférence et travaillant entre les plateaux latéraux et le flasque interne pour amortir la rotation entre l'élément de friction supporté par les plateaux latéraux et le manchon d'entraînement, la périphérie extérieure du flasque interne présentant des découpes circulairement espacées (22) qui reçoivent des butées (23) s'étirant entre les plateaux latéraux, les butées étant en forme de U inversé et limitant la rotation des plateaux latéraux par rapport au flasque, par contact entre les bases (23a) des éléments en U et les extrémités des découpes circulaires espacées (22), le disque d'embrayage **se caractérisant en ce qu'**un premier côté (23c) de chaque butée en U inversé (23) comprend deux oreilles de fixation circulairement espacées (23e), par chacune desquelles un premier rivet (25) fixe l'oreille à un premier plateau latéral (15a) ; **en ce que** l'autre côté (23b) de chaque butée comporte un unique rivet de plus grand diamètre (24) qui fixe ledit autre côté à l'autre plateau latéral (15b), ledit unique rivet de plus grand diamètre (24) se trouvant placé à la circonférence entre lesdites deux oreilles de fixation circulairement espacées (23e) ; **en ce que** ledit premier plateau latéral (15a) présente une première série d'ouvertures (15c) destinées à s'aligner sur un rivet respectif de plus grand diamètre (24) et à se placer entre les oreilles de fixation (23e) de chaque butée respective ; et **en ce que** ledit flasque interne (16) présente aussi une seconde série d'ouvertures (16a) destinées à s'aligner sur un rivet respectif de plus grand diamètre (24), de manière à pouvoir poser lesdits rivets de plus grand diamètre par des goupilles (43) qui passent entre les oreilles de fixation (23e) de chaque butée respective et traversent la première et la seconde séries d'ouvertures alignées (15c, 16a) afin de s'engager dans chaque rivet respectif de plus grand diamètre (24).

2. Disque d'embrayage selon la revendication 1, dans lequel les butées en U (23) sont attachées à l'extérieur de l'un ou des deux plateaux latéraux (15a, 15b), et la périphérie extérieure de l'un ou des deux plateaux latéraux est pourvue de découpes destinées à permettre le passage des butées.

3. Disque d'embrayage selon la revendication 1 ou 2, dans lequel le moyeu (14) comprend aussi un moyen d'amortissement de friction destiné à amortir la rotation des plateaux latéraux (15a, 15b) par rapport au flasque (16).

4. Disque d'embrayage selon l'une quelconque des revendications 1 à 3, dans lequel le moyeu (14) comprend aussi un dispositif supplémentaire d'amortissement du cliquetis de ralenti (26), afin d'amortir les vibrations de torsion de faible amplitude au sein du moyeu.

5. Procédé d'assemblage d'un disque d'embrayage (10) selon la revendication 1, comprenant les étapes consistant à :
- riveter le premier côté (23c) de chaque butée au premier plateau latéral (15a) au moyen des premiers rivets (25) pour former un sous-ensemble ;
- assembler le reste du disque d'embrayage par dessus l'autre plateau latéral (15b);
- placer le sous-ensemble sur la partie déjà assemblée du disque d'embrayage ;
- et riveter l'autre côté (23b) de chaque butée à l'autre plateau latéral (15b) pour maintenir l'ensemble du disque d'embrayage, en utilisant les rivets de plus grand diamètre (24) avec des goupilles (43) qui passent entre les oreilles de fixation (23e) de chaque butée respective et traversent la première et la seconde séries d'ouvertures alignées (15c, 16a) afin de s'engager dans chaque rivet respectif de plus grand diamètre (24).
